(19) Europäisches Patentamt
European Patent Office
Office européen des brevets

(11) Publication number: 0 178 932
B1

(12) **EUROPEAN PATENT SPECIFICATION**

(45) Date of publication of patent specification: **18.01.89**

(51) Int. Cl.$^4$: **H 04 N 17/02**

(21) Application number: **85307502.6**

(22) Date of filing: **17.10.85**

# (54) Method and apparatus for measurement of component video signal characteristics.

(30) Priority: **19.10.84 US 662718**

(43) Date of publication of application:
**23.04.86 Bulletin 86/17**

(45) Publication of the grant of the patent:
**18.01.89 Bulletin 89/03**

(84) Designated Contracting States:
**DE FR GB NL**

(56) References cited:
**US-A-3 614 304**
**US-A-4 180 829**
**US-A-4 488 168**

(73) Proprietor: **TEKTRONIX, INC.**
**Tektronix Industrial Park D/S Y3-121 4900 S.W. Griffith Drive P.O. Box 500**
**Beaverton Oregon 97077 (US)**

(72) Inventor: **Thong, Tran**
**8780 S.W. Pacer**
**Beaverton Oregon 97005 (US)**

(74) Representative: **Burke, Steven David et al**
**R.G.C. Jenkins & Co. 26 Caxton Street**
**London SW1H 0RJ (GB)**

**EP 0 178 932 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

BACKGROUND OF THE INVENTION

This invention relates to component color video signal measurement methods and apparatus, particularly to measurements of spectral and temporal distortion, and to measurements of the characteristics of time-division multiplexed component video signals.

In conventional color television systems the color characteristics of the video image, that is, the luminance, hue, and saturation, are ordinarily represented by three signal components. The components sometimes used are one luminance component and two distinct chrominance ("chroma") components. The two chroma components are typically synthesized from a weighted combination of red, green, and blue signal levels.

The conventional method of transmission of television signals in the United States is based upon a method of frequency-division multiplexing adopted by the National Television System Committee (NTSC) in 1953. In that system signals representing the luminance and chroma components are frequency-division multiplexed and transmitted simultaneously. The chroma signals are shifted in phase 90 degrees from one another and thereafter used to modulate the same subcarrier, which is suppressed prior to adding the luminance signal with the product resulting from the subcarrier modulation. In demodulation the subcarrier must be regenerated. Hence, the relative phase and amplitudes of the chroma signals and the subcarrier are important.

Modern technology has led to a trend toward the adoption of time-division multiplexed color television modulation. In these systems the luminance and chroma components are separated from one another in time and transmitted in sequence. For example, for each horizontal scan line a first chroma component segment corresponding to that scan line is transmitted, followed immediately by the transmission of a segment of the second chroma component corresponding to the same scan line. The corresponding segment of the luminance component is transmitted immediately thereafter. Methods known as "time compressed color component" (TC3) and "multiplexed analogue component" (MAC) are variations of the foregoing scheme.

In time-division multiplexed systems there is no color subcarrier, so there is no need to measure the relative amplitude and phase of chroma components in the traditional sense. However, the relative timing between chroma component segments, and between the luminance and chroma component segments is important, as it affects the accuracy of the transition from one color to another in the received image. The bandwidth of the signal channels for all of the components is still important because it affects image definition, and the relative signal levels of the components are important because they affect the hue and saturation of the image produced.

A well known instrument for measuring the amplitude and phase characteristics of an NTSC frequency-division multiplexed signal is a vectorscope, for example, a Tektronix Model 520A NTSC vectorscope. As is commonly known in the art, such an instrument is essentially an oscilloscope having video signal decoding circuitry that provides to the horizontal and vertical deflection circuitry two signals representing the chroma components of the video signal. The oscilloscope trace is referenced to a polar coordinate system on the graticule, thereby providing a display indicative of the phase relative to subcarrier and amplitude of the color signals. Typically, positions are shown on a graticule over the display of the dots created by the trace representing selected saturated hues employed in the generation of a test pattern, ordinarily a color bar pattern. The trace transition between the dots is of little significance, since its shape is principally a function of the circuitry of the vectorscope itself. Thus, while such an instrument is valuable for measuring the relative phase and amplitude characteristics of chroma in an NTSC signal, it is not useful for measuring the spectral or transient characteristic of such a signal, nor is it useful for measuring the timing of a time-division multiplexed component color video signal.

Accordingly, it would be desirable to have a method and apparatus for measuring the spectral, timing, and amplitude characteristics of any type of component color video signal, and specifically for the measuring of a time-division multiplexed signal.

SUMMARY OF THE INVENTION

The present invention provides a novel method and apparatus for measuring the characteristics of a component color video signal by means of a visual display.

In one embodiment of the invention one, or both, of the chroma components of a component color video signal is compared to the luminance component. An electronic visual display apparatus having one input corresponding to the abscissa of a Cartesian coordinate system and another input corresponding to the ordinate, such as a cathode ray tube display, is employed, the decoded luminance component being applied to the ordinate input and the decoded chrominance component being applied to the abscissa input of the display. Considering those two signals as orthogonal vectors having directions along the ordinate and abscissa, respectively, the display shows a representation of the vector sum of those two signals. The resultant trace permits measurements of the relative bandwidth of the chrominance and luminance signals, time delays between the chrominance and luminance signals, and amplitude variations in the signals. Superposition of a graticule having a standard display reference on the face of the display apparatus allows these characteristics to be related to a standard, and quantified. Such a display is useful for bandwidth, time delay, and amplitude measurements in a decoded time-division multiplexed system, and bandwidth and amplitude measurements in a decoded frequency-division multiplexed system.

A variation of the foregoing employs a switching circuit that alternately provides a first chroma component signal to the abscissa while the luminance component signal is applied to the ordinate, then provides a second chroma component signal to the abscissa while the luminance component signal is inverted and applied to the ordinate, and so forth. As a result the first two quadrants of the display compare the first chrominance component to the luminance component, and the last two quadrants of the display compare the second chroma component to the luminance component.

In the case of a time division multiplexed signal, time delay circuitry is provided so that the chroma component signals are shifted in time so as to occur, absent time delay distortion, simultaneously with corresponding portions luminance component signal.

In another embodiment of the invention the two chroma component signals of a time-division multiplexed signal are supplied respectively to the abscissa and ordinate inputs of the display apparatus. In this case a time delay circuit is used so that corresponding portions of both signals occur simultaneously, absent time delay distortion. This permits measurements of time delay, relative bandwidth, and relative amplitude between the chroma component signals.

Arrangements embodying the invention will be more readily understood upon consideration of the following detailed description of the invention, taken in conjunction with the accompanying drawings.

## BRIEF DESCRIPTION OF THE DRAWINGS

FIG. 1 shows an exemplary display according to the present invention wherein one chrominance component is compared to the other in a time-division multiplexed component color video system.

FIG. 2 shows a block diagram of an exemplary apparatus according to the present invention for producing the display shown in FIG. 1.

FIGS. 3(a)-(c) illustrate exemplary component color video signal conditions responsive to a color bar test pattern, and the respective waveforms generated as the display produced by the apparatus shown in FIG. 2.

FIG. 4 illustrates the effect of a bandwidth differential between the two chrominance component transmission paths as represented by the display produced by the apparatus shown in FIG. 2.

FIG. 5 shows an exemplary display according to the present invention wherein both chroma components are compared to the luminance component in a component color video system.

FIG. 6 shows a block diagram of an exemplary apparatus according to the present invention for producing the display shown in FIG. 5.

FIGS. 7(a)-(c) illustrate exemplary time domain representations of chrominance and luminance signals produced in response to a color bar test pattern, and the respective waveforms generated as the display produced by the apparatus shown in FIG. 6.

FIG. 8 illustrates an exemplary waveform representing amplitude offset in a video signal, as shown by the display of FIG. 5.

## DETAILED DESCRIPTION OF THE INVENTION

Referring to FIG. 1, the display of the present invention is based upon a Cartesian coordinate system wherein the amplitude of one signal is represented by a point on the abscissa 10 and the amplitude of the other signal is represented by a point on the ordinate 12. Those two signals can be represented as vectors in the directions of the abscissa and ordinate, respectively. For example, a first chroma component signal C1 for a particular color is represented by vector 14 on the abscissa, and a second chroma component signal C2 for the same color is represented by a vector 16 on the ordinate. The display shows a dot 18 representing the vector sum 20 of the two chroma component vectors 14 and 16.

Turning to FIG. 2, the display is, as a practical matter, produced by an electronic visual display device such as a cathode ray tube display device 22 having horizontal (x) and vertical (y) inputs corresponding, respectively, to the abscissa and ordinate of the aforementioned Cartesian coordinate system. It is to be understood, however, that other electronic display devices capable of plotting the vector sum of two vectors on orthogonal axes, such as a raster scan display device, could also be used without departing from the principles of this invention.

In the embodiment represented by FIGS. 1 and 2, the object is to produce a display representative of one chroma component relative to the other in a time—division multiplexed component color video system. In such a measurement apparatus means must be provided for separating both chroma component signals from the video signal. This is accomplished by the chroma 1 separation circuit 24 and the chroma 2 separation circuit 26 in FIG. 2. Once separated from the video input 27, the two signals are still separated in time from one another, the chroma 2 signal ideally occurring at a precisely known period of time after the chroma 1 signal. Hence, to compare the two signals to one another, time shifting must occur so that, absent distortion, portions of each signal corresponding to the same part of the video image would occur simultaneously. In the exemplary embodiment of the apparatus, this is accomplished by a delay circuit 28, responsive to the output of the chroma 1 separation circuit, which delays the chroma 1 signal so that it should occur simultaneously with the chroma 2 signal. The chroma 2 signal is input to the horizontal axis of the CRT display 22 and the delayed chroma 1 signal is input to the vertical axis of the CRT display. In an ideal video signal transmission system the resultant display would appear, for example, as shown in FIG. 1.

Turning to FIGS. 3(a)-(c), a conventional test pattern employed to evaluate the characteristics of a component color video transmission system is a color bar test pattern signal, a portion of which is represented at 30 by the two color bars 32 and 34. An example of an ideal time-division multiplexed signal is represented at 36, the first chroma component C1 occurring immediately prior to the second chroma component C2, which, in turn, occurs immediately prior to the luminance component y. This should result in a dot 38, produced by the display apparatus trace and representing color 32, a dot 40, also produced by the display apparatus trace and representing the color 34, and, in the absence of any time delay distortion, a transitional trace from the dot 38 to the dot 40 that is a straight line.

At 42 of FIG. 3(b) a time-division multiplexed signal is shown wherein chroma component C2 has been delayed with respect to chroma component C1. This is indicated by the curved transition between dots 38′ and 40′ of FIG. 3(b). At 44 of FIG. 3(c) chroma component C2 is advanced with respect to chroma component C1, resulting in the transitional curve shown between dots 38″ and 40″. Thus, the transition between the dots on the display shown in FIG. 1 is an indication of the presence or absence of time delay distortion in a time-division multiplexed system.

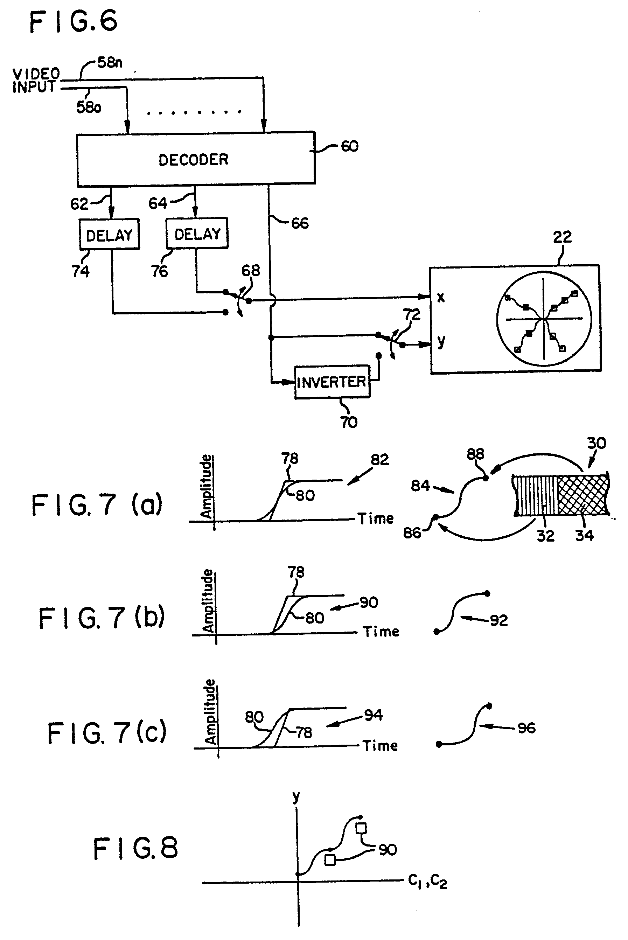

Spectral differentials between the two chroma component signals are represented by FIG. 4. Ordinarily the spectrum of both chroma component signals and the bandwidth of their respective transmission channels would be identical, resulting in a straight line between dots 3S and 40 of FIG. 3(a). Where there is a difference in signal spectrum, either normal or resulting from channel bandwidth distortion, an S-shaped trace will result, as shown in FIG. 4. The degree of curvature is a measure of the degree of spectral differential.

Turning now to FIG. 5, in another embodiment of the invention the display is also based on a Cartesian coordinate system except that, while a chroma component C1 or C2 signal is represented by a point on the abscissa 46 the ordinate 48 represents the luminance signal y. Thus, the vector 50 corresponds to an instantaneous chroma component signal, while the vector 52 corresponds to an instantaneous luminance component signal. In the foregoing example dot 54 represents the vector sum 56 of the aforementioned chroma and luminance component signals.

As a practical matter, the display is produced by an electronic visual display device such as the aforementioned cathode ray tube display device 22, having a horizontal (x) input corresponding to the abscissa and a vertical (y) input corresponding to the ordinate, as shown in FIG. 6. Although the display could be used to compare only one chroma component to the luminance component, it is preferred that it be constructed so as to compare both chroma components to the luminance component. This is accomplished by alternately applying the luminance component signal to the vertical input while a first chroma component signal is applied to the horizontal input, then applying an inverted luminance component signal to the vertical input while the second chroma component signal is applied to the horizontal input, so that the first two quadrants of the display represent the first chroma component compared to the luminance component and the last two quadrants of the display represent the second chroma component compared to the luminance component, as shown in FIG. 5. This is because the minimum amplitude of the luminance signal is assumed to be zero, while the chroma signals take on both positive and negative values.

The aforedescribed display can be used effectively for frequency-division multiplexed as well as time-division multiplexed video signals. In FIG. 6 the video signal input is represented by one or more input channels 58a-58n. Where a composite frequency—division multiplexed or time-division multiplexed video signal is used, only one input channel is necessary. Additional channels may be desired for other types of systems. In the first case, a decoder 60 converts the video signal input into three components, that is, the chroma 1 component 62, the chroma 2 component 64, and the luminance component 66. Inversion of the luminance component signal is accomplished by an inverter 70. Selection between the two chroma component signals is accomplished periodically by an electronic switch 68, and selection between the luminance component signal and the inverted luminance component signal is accomplished by an electronic switch 72, the two electronic switches being synchronized. In the case of a timedivision multiplexed video signal, delay circuits 74 and 76 must be provided for the chroma 1 and chroma 2 signals, respectively, in order for portions of those two signals and of the luminance signal corresponding to the same portion of the video image to occur simultaneously, absent time delay distortion.

In FIG. 7(a), an idealized luminance component signal 78 and an idealized chrominance component signal 80 are shown in the time domain at 82. The image that would result in the display of the type shown in FIG. 5 is shown at 84. For a color bar test pattern 30, the color 32 would correspond to dot 86 and the color 34 would correspond to dot 88. Since the bandwidth of the luminance signal is ordinarily wider than the bandwidth of a chroma signal, an S-shape image ordinarily results. However, as in the image of FIG. 4, if a change in the bandwidth occurs, the shape of the transitional image would change as well. Thus, the bandwidth characteristics can be measured by the shape of this curve.

A condition where a chroma component signal is delayed with respect to the luminance component signal is shown at 90 of FIG. 7(b), and the resultant image is shown at 92. A condition where the chroma, component signal is advanced with respect to the luminance component signal is shown at 94 of FIG. 7(c), and the resultant image at 96 thereof. It can be seen that a time delay also results in a distinct change in the shape of the transitional image, that is, a shortening or lengthening of the ends of the S-shaped curve.

Referring again to both FIGS. 1 and 5, the positions that the dots, representing distinct colors of a color bar test pattern, should assume on the respective displays can be identified on a graticule by an appropriate symbol, such as boxes 90. As shown in FIG. 8, where the luminance level is out of proportion to the chrominance level in a display of the type shown in FIG. 5, when the dots do not fall within their corresponding box, an amplitude error is indicated.

An appropriate graticule can be provided by conventional means, such as etching reference lines and symbols onto a glass plate. The plate is then placed over the face of the display apparatus, for example, over the face of a CRT. Alternatively, a graticule could be generated using the trace of the display device.

In use of the aforedescribed apparatus one would transmit an appropriate test pattern, that is, a color bar test pattern, over the video system and apply the received signal to the appropriate apparatus of FIG. 2 or FIG. 6. Measurement of the characteristics of the signal is accomplished by observing the resultant display trace, particularly by relating the shape and position of the trace to the symbols on the graticule.

It may be advantageous to employ smaller width color bars than have heretofore been used in an NTSC color bar test pattern to reduce the time that the display trace spends at the color dots relative to the transitional traces and thereby increase the relative intensity of the transitional traces, since the information contained in the transition traces is of great importance in the use of this method and apparatus.

The terms and expressions which have been employed in the foregoing specification are used therein as terms of description and not of limitation, and there is no intention of the use of such terms and expressions of exluding equivalents of the features shown and described or portions thereof, it being recognized that the scope of the invention is defined and limited only by the claims which follow.

## Claims

1. An apparatus for measurement of characteristics of a component color video signal, comprising:

(a) display means for producing in two dimensions a visual representation of the vector sum of two display signals, each said display signal corresponding to a respective vector having a direction orthogonal to the other and lying in a plane defined by said two dimensions; and

(b) input means for providing to said display means a chrominance component of said video signal as one said display signal and the luminance component of said video signal as the other said display signal.

2. The apparatus of claim 1 wherein said video signal is a time-division multiplexed component color video signal, the apparatus further comprising time shifter means for producing from said video signal said chrominance component and said luminance component shifted in time a predetermined amount relative to one another.

3. The apparatus of claim 1 further comprising graticule means superimposed on said display means for relating said visual representation to a standard, said graticule means including symbols identifying positions on said display corresponding to respective positions of a standard visual representation of selected hues.

4. The apparatus of claim 1 wherein said plane is a Cartesian plane, one said vector direction corresponding to the abscissa of a corresponding Cartesian coordinate system, and the other said vector direction corresponding to the ordinate thereof, said display means having respective abscissa and ordinate signal inputs thereto.

5. The apparatus of claim 4 wherein said display means comprises a cathode ray tube display device, said abscissa input corresponding to the horizontal input thereof and said ordinate input corresponding to the vertical input thereof.

6. The apparatus of claim 4 wherein said input means provides said luminance component to said ordinate input of said display means and said chrominance component to said abscissa input of said display means.

7. The apparatus of claim 6 wherein said component video signal is a time-division multiplexed component color video signal, the apparatus further comprising time shifter means for producing from said video signal said chrominance component and said luminance component shifted in time a predetermined amount relative to one another.

8. The apparatus of claim 6 wherein said input means includes inverter means for producing an inverted luminance component and switching means for alternately providing one chroma component of said video signal to said display means with the luminance component, and the other chroma component with the inverted luminance component.

9. The apparatus of claim 8 further comprising graticule means superimposed on said display means for relating said visual representation to a standard, said graticule means including symbols identifying positions on said display corresponding to respective positions of a standard visual representation of selected hues.

10. An apparatus for measurement of characteristics of a time-division multiplexed component color video signal, comprising:

(a) display means for producing in two dimensions a visual representation of the vector sum of two display signals, each said display signal corresponding to a respective vector having a direction orthogonal to the other and lying in a plane defined by said two dimensions;

(b) time shifter means for producing from said video signal two input signals, each said input signal representing one respective component of said video signal shifted in time a predetermined amount relative to the other; and

(c) input means for providing to said display means one said input signal as one said display signal and the other said input signal as the other said display signal.

11. The apparatus of claim 10 wherein both said input signals represent chrominance components of said video signal.

12. The apparatus of claim 10 wherein one said input signal represents a chrominance component of said video signal and the other said input signal represents the luminance component of said video signal.

13. The apparatus of claim 10 wherein said time shifter means comprises a delay circuit for shifting one said component an amount of time so that, absent distortion, portions of the two components corresponding to the same part of the video image would occur at the same time.

14. The apparatus of claim 10 further comprising graticule means superimposed on said display means for relating said visual representation to a standard, said graticule means including symbols identifying positions on said display corresponding to respective positions of a standard visual representation of selected hues.

15. The apparatus of claim 10 wherein said plane is a Cartesian plane, one said vector direction corresponding to the abscissa of a corresponding Cartesian coordinate system, and the other said vector direction corresponding to the ordinate thereof, said display means having respective abscissa and ordinate signal inputs thereto.

16. The apparatus of claim 15 wherein one said input signal represents one chrominance component of said video signal and the other said input signal represents the other chrominance component of said video signal.

17. The apparatus of claim 15 wherein one said input signal represents a chrominance component of said video signal and the other said input signal represents the luminance component of said video signal.

18. The apparatus of claim 17 further comprising inverter means for producing an inverted luminance component and switching means for alternately providing to said ordinate input and said abscissa input, first said luminance signal and one chrominance component, respectively, then said inverted luminance signal and the other chrominance signal, respectively.

19. The apparatus of claim 18 further comprising graticule means superimposed on said display means for relating said visual representation to a standard, said graticule means including symbols identifying positions on said display corresponding to respective positions of a standard visual representation of selected hues.

20. A method for measuring the characteristics of a component color video signal using a display means for producing in two dimensions a visual representation of the vector sum of two display signals, each said display signal corresponding to a respective vector having a direction orthogonal to the other and lying in a plane defined by said two dimensions, said method comprising:

(a) providing to said display means as one said display signal a chrominance component of said video signal; and

(b) providing to said display means as the other said display signal the luminance component of said video signal.

21. The method of claim 20 wherein said video signal is a time-division multiplexed signal and said method further comprises shifting said chrominance component in time so that, absent distortion, portions of said chrominance component and said luminance component corresponding to the same part of the video image would occur simultaneously.

22. The method of claim 20 further comprising superimposing a graticule on said display means for relating said visual representation to a standard, said graticule including symbols identifying positions on said display corresponding to respective positions of a standard visual representation of selected hues.

23. The method of claim 20 wherein said plane of said display means is a Cartesin plane, one said vector direction corresponding to the abscissa of a Cartesin coordinate system, and the other said vector direction corresponding to the ordinate thereof, said method further comprising providing said luminance signal to the ordinate thereof and said chrominance signal to the abscissa thereof.

24. The method of claim 23 wherein said video signal is a time-division multiplexed signal, said method further comprising shifting said chrominance component so that, absent distortion, portions of said chrominance and said luminance components corresponding to the same part of the video image would occur at the same time.

25. The method of claim 23, further comprising producing an inverted luminance component, and alternately providing said luminance component to said ordinate while a first chrominance component is provided to said abscissa, and said inverted luminance component to said ordinate while the second chrominance component is provided to said abscissa.

26. The method of claim 25 comprising superimposing a graticule on said display means for relating said visual representation to a standard, said graticule including symbols identifying positions on said display corresponding to respective positions of a standard visual representation of selected hues.

27. A method for measuring the characteristics of a time-division multiplexed component color video signal using a display means for producing in two dimensions a visual representation of the vector sum of two display signals, each said display signal corresponding to a respective vector having a direction orthogonal to the other and lying in a plane defined by said two dimensions, said method comprising:

(a) shifting a first component of said video signal in time so that, absent distortion, portions of said first component and a second component corresponding to the same part of the video image would occur at the same time;

(b) providing to said display means as one said display signal said first, shifted component; and

(c) providing to said display means as the other said display signal said second component of said video signal.

28. The method of claim 27 wherein both said first component and said second component are chrominance components.

29. The method of claim 27 wherein said first component is a chrominance component and said second component is a luminance component.

30. The method of claim 29 further comprising shifting the other chrominance component of said video signal in time so that, absent distortion, portions of said first chrominance component, second luminance component, and said other chrominance component corresponding to the same part of the video image would occur at the same time, producing an inverted luminance component, and alternately providing said luminance component to said ordinate while said first, shifted chrominance component is provided to said abscissa, and said inverted luminance component to said ordinate while said other, shifted chrominance component is provided to said abscissa.

31. The method of claim 30 comprising superimposing a graticule on said display means for relating said visual representation to a standard, said graticule including symbols identifying positions on said display corresponding to respective positions of a standard visual representation of selected hues.

**Patentansprüche**

1. Vorrichtung zum Messen der Eigenschaften von in Komponenten zerlegten Videosignalen mit:

(a) einer Anzeigeeinrichtung zur Erzeugung einer visuellen Darstellung der Vektorsumme zweier Anzeigesignale in zwei Dimensionen, wobei jedes Anzeigesignal einem jeweiligen Vektor entspricht, dessen Richtung senkrecht auf der des jeweiligen anderen steht und der in einer durch die beiden Dimensionen definierten Ebene liegt; und

(b) einer Eingangsanordnung zur Zuführung einer Chrominanzkomponente des Videosignals als eines der Anzeigesignale sowie der Luminanzkomponente des Videosignals als das andere Anzeigesignal zur Anzeigeeinrichtung.

2. Vorrichtung nach Anspruch 1, in der das Videosignal ein Zeitteilungs-Multiplexkomponenten-Farbvideosignal ist, mit einer Zeitschieberanordnung zur Erzeugung der Chrominanzkomponente und der Luminanzkomponente aus dem Videosignal, die relativ zueinander um eine vorgegebene Zeit verschoben sind.

3. Vorrichtung nach Anspruch 1 mit einer der Anzeigeeinrichtung überlagerten, die visuelle Darstellung auf eine Norm beziehenden Rastereinrichtung, welche Symbole zur Identifizierung von Stellen auf der Anzeige entsprechend den jeweiligen Stellen einer visuellen Standard-Darstellung ausgewählter Farbwerte aufweist.

4. Vorrichtung nach Anspruch 1, in der die Ebene eine kartesische Ebene ist, eine der Vektorrichtungen der Abszisse eines entsprechenden kartesischen Koordinatensystems und die andere Vektorrichtung dessen Ordinate entspricht, und in der die Anzeigeeinrichtung einen entsprechenden Abszissen- und Ordinatensignaleingang besitzt.

5. Vorrichtung nach Anspruch 4, in der die Anzeigerichtung eine Kathodenstrahlröhren-Anzeigeeinrichtung ist und in der der Abszisseneingang dem Horizontaleingang und der Ordinateneingang dem Vertikaleingang entspricht.

6. Vorrichtung nach Anspruch 4, in der die Eingangsanordnung die Luminanzkomponente in den Ordinateneingang der Anzeigeeinrichtung und die Chrominanzkomponente in den Abszisseneingang der Anzeigeeinrichtung einspeist.

7. Vorrichtung nach Anspruch 6, in der das in Komponenten zerlegte Videosignal ein Zeitteilungs-Multiplexkomponenten-Farbvideosignal ist und in der eine Zeitschieberanordnung zur Erzeugung der Chrominanzkomponente und der Luminanzkomponente vorgesehen ist, die relativ zueinander um eine vorgegebene Zeit verschoben sind.

8. Vorrichtung nach Anspruch 6, in der die Eingangsanordnung einen Inverter zur Erzeugung einer invertierten Luminanzkomponente sowie einen Umschalter zur abwechselnden Einspeisung einer Chromakomponente des Videosignals mit der Luminanzkomponente und der anderen Chrominanzkomponente mit der invertierten Luminanzkomponente in die Anzeigeeinrichtung enthält.

9. Vorrichtung nach Anspruch 8 mit einer der Anzeigeeinrichtung überlagerten, die visuelle Darstellung auf eine Norm beziehenden Rastereinrichtung, welche Symbole zur Identifizierung von Stellen auf der Anzeige entsprechend den jeweiligen Stellen einer visuellen Standard-Darstellung ausgewählter Farbwerte aufweist.

10. Vorrichtung zum Messen der Eigenschaften eines Zeitteilungs-Multiplexkomponenten-Farbvideosignals mit:

(a) einer Anzeigeeinrichtung zur Erzeugung einer visuellen Darstellung der Vektorsumme zweier Eingangssignale in zwei Dimensionen, wobei jedes Anzeigesignal einem zugehörigen Vektor entspricht, der eine Richtung senkrecht zum jeweiligen anderen Vektor besitzt und in einer durch die beiden Dimensionen definierten Ebene liegt;

(b) einer Zeitschieberanordnung zur Erzeugung von zwei Eingangssignalen aus dem Videosignal, wobei jedes Eingangssignal eine zugehörige Komponente des Videosignals repräsentiert, die relativ zueinander um eine vorgegebene Zeit verschoben sind; und

(c) eine Eingangsanordnung zur Einspeisung eines der Eingangssignale als ein Anzeigesignal und des anderen der Eingangssignale als das andere Anzeigesignal in die Anzeigeeinrichtung.

11. Vorrichtung nach Anspruch 10, in der die beiden Eingangssignale Chrominanzkomponenten des Videosignals repräsentieren.

12. Vorrichtung nach Anspruch 10, in der ein Eingangssignal eine Chrominanzkomponente des Videosignals und das andere Eingangssignal die Luminanzkomponente des Videosignals repräsentiert.

13. Vorrichtung nach Anspruch 10, in der die Zeitschieberanordnung durch eine Verzögerungsschaltung zur Verschiebung einer Komponente um eine solche Zeit gebildet ist, daß bei nicht vorhandener Verzerrung Teile der beiden Komponenten entsprechen dem gleichen Teil des Videobildes gleichzeitig auftreten.

14. Vorrichtung nach Anspruch 10 mit einer der Anzeigeeinrichtung überlagerten, die visuelle Darstellung auf eine Norm beziehenden Rastereinrichtung, welche Symbole zur Identifizierung von Stellen auf der Anzeige entsprechend den jeweiligen Stellen einer visuellen Standard-Darstellung ausgewählter Farbwerte aufweist.

15. Vorrichtung nach Anspruch 10, in der die Ebene eine kartesische Ebene ist, eine der Vektorrichtungen der Abszisse eines entsprechenden kartesischen Koordinatensystems und die andere Vektorrichtung dessen Ordinate entspricht, und in der die Anzeigeeinrichtung einen entsprechenden Abszissen- und Ordinatensignaleingang besitzt.

16. Vorrichtung nach Anspruch 15, in der ein Eingangssignal eine Chrominanzkomponente des Videosignals und das andere Eingangssignal die andere Chrominanzkomponente des Videosignals repräsentiert.

17. Vorrichtung nach Anspruch 15, in der ein Eingangssignal eine Chrominanzkomponente des Videosignals und das andere Eingangssignal die Luminanzkomponente des Videosignals repräsentiert.

18. Vorrichtung nach Anspruch 17 mit einer Inverter zur Erzeugung einer invertierten Luminanzkomponente und einem Umschalter zur abwechselnden Einspeisung zunächst des Luminanzsignals und einer Chrominanzkomponente und sodann des invertierten Luminanzsignals und der anderen Chrominanzkomponente in den Ordinateneingang und den Abszisseneingang.

19. Vorrichtung nach Anspruch 18 mit einer der Anzeigeeinrichtung überlagerten, die visuelle Darstellung auf eine Norm beziehenden Rastereinrichtung, welche Symbole zur Identifizierung von Stellen auf der Anzeige entsprechend den jeweiligen Stellen einer visuellen Standard-Darstellung ausgewählter Farbwerte aufweist.

20. Verfahren zum Messen der Eigenschaften eines in Komponenten zerlegten Farbvideosignals unter Verwendung einer Anzeigeeinrichtung zur Erzeugung einer visuellen Darstellung der Vektorsumme zweier Anzeigesignale in zwei Dimensionen, wobei jedes Anzeigesignal einem zugehörigen Vektor entspricht, der senkrecht auf dem jeweils anderen Vektor steht und in einer durch die zwei Dimensionen definierten Ebene liegt, mit folgenden Schritten:

(a) Einspeisen einer Chrominanzkomponente des Videosignals als ein Anzeigesignal in die Anzeigeeinrichtung; und

(b) Einspeisen der Luminanzkomponente des Videosignals als das andere Anzeigesignal in die Anzeigeeinrichtung.

21. Verfahren nach Anspruch 20 für ein Videosignal in Form eines Zeitteilungs-Multiplexsignals, bei dem die Chrominanzkomponente zeitlich derart verschoben wird, daß bei fehlender Verzerrung Teile der Chrominanzkomponente und der Luminanzkomponente entsprechend dem gleichen Teil des Videobildes gleichzeitig auftreten.

22. Verfahren nach Anspruch 20, bei dem der Anzeigeeinrichtung eine Rastereinrichtung überlagert wird, um die visuelle Darstellung auf eine Norm zu beziehen, und bei dem die Rastereinrichtung Symbole aufweist, welche Stellen auf der Anzeige identifizieren, die zugehörigen Stellen einer visuellen Normdarstellung ausgewählter Farbwerte entsprechen.

23. Verfahren nach Anspruch 20 für eine Ebene der Anzeigeeinrichtung in Form einer kartesischen Ebene, wobei eine Vektorrichtung der Abszisse eines kartesischen Koordinatensystem und die andere Richtung dessen Ordinate entspricht, bei dem das Luminanzsignal der Ordinate und das Chrominanzsignal der Abszisse zugeordnet wird.

24. Verfahren nach Anspruch 23 für ein Videosignal in Form eines Zeitteilungs-Multiplexsignals, bei dem die Chrominanzkomponente so verschoben wird, daß bei fehlender Verzerrung Teile der Chrominanz- und der Luminanzkomponente entsprechend dem gleichen Teil des Videobildes gleichzeitig auftreten.

25. Verfahren nach Anspruch 23, bei dem eine invertierte Luminnanzkomponente erzeugt wird, bei dem abwechselnd die Luminanzkomponente der Ordinate zugeordnet wird, wenn eine erste Chrominanzkomponente der Abszisse zugeordnet wird, und die invertierte Luminanzkomponente der Ordinate zugeordnet wird, wenn die zweite Chrominanzkomponente der Abszisse zugeordnet wird.

26. Verfahren nach Anspruch 25, bei dem der Anzeigeeinrichtung eine Rastereinrichtung überlagert wird, um die visuelle Darstellung auf eine Norm zu beziehen, und bei dem die Rastereinrichtung Symbole aufweist, welche Stellen auf der Anzeige repräsentieren, die zugeordneten Stellen einer visuellen Normdarstellung ausgewählter Farbwerte entsprechen.

27. Verfahren zum Messen der Eigenschaften eines Zeitteilungs-Multiplexkomponenten-Farbvideosignals unter Verwendung einer Anzeigeeinrichtung zur Erzeugung einer visuellen Darstellung der Vektorsumme von zwei Anzeigesignalen in zwei Richtungen, wobei jedes Anzeigesignal einem zugeordneten Vektor entspricht, dessen Richtung senkrecht auf der des jeweiligen anderen steht und der in einer durch die beiden Abmessungen definierten Ebene liegt, bei dem:

(a) eine erste Komponente des Videosignals zeitlich so verschoben wird, daß bei fehlender Verzerrung Teile der ersten Komponente und der zweiten Komponente entsprechend dem gleichen Teil des Videobildes gleichzeitig auftreten;

(b) der Anzeigeeinrichtung die erste verschobene Komponente als ein Eingangssignal zugeführt wird; und

(c) der Anzeigeeinrichtung die zweite Komponente des Videosignals als das andere Anzeigesignal zugeführt wird.

28. Verfahren nach Anspruch 27, bei dem die erste und die zweite Komponente Chrominanzkomponenten sind.

29. Verfahren nach Anspruch 27, bei dem die erste Komponente eine Chrominanzkomponente und die zweite Komponente eine Luminanzkomponente ist.

30. Verfahren nach Anspruch 29, bei dem die andere Chrominanzkomponente des Videosignals zeitlich so verschoben wird, daß bei fehlender Verzerrung Teile der ersten Chrominanzkomponente, der zweiten Luminanzkomponente und der anderen Chrominanzkomponente entsprechend dem gleichen Teil des Videobildes gleichzeitig auftreten, bei dem eine invertierte Luminanzkomponente erzeugt wird und bei dem abwechselnd die Luminanzkomponente der Ordinate zugeordnet wird, während die erste verschobene Chrominanzkomponente der Abszisse zugeordnet wird, und die invertierte Luminanzkomponente der Ordinate zugeordnet wird, während die andere verschobene Chrominanzkomponente der Abszisse zugeordnet wird.

31. Verfahren nach Anspruch 30, bei dem der Anzeigeeinrichtung eine Rastereinrichtung überlagert wird, um die visuelle Darstellung auf eine Norm zu beziehen und bei dem die Rastereinrichtung Symbole aufweist, welche Stellen auf der Anzeige identifzieren, die zugehörigen Stellen einer visuellen Normdarstellung ausgewählter Farbwerte entsprechen.

**Revendications**

1. Appareil pour la mesure de caractéristiques d'un signal vidéo couleur à composantes, caractérisé en ce qu'il comprend:

(a) des moyens d'affichage pour produire en deux dimensions une représentation visuelle de la somme vectorielle de deux signaux d'affichage, chacun de ces signaux d'affichage correspondant à un vecteur respectif ayant une direction orthogonale à celle de l'autre et situé dans un plan défini par les deux dimensions; et

(b) des moyens d'entrée pour fournir aux moyens d'affichage (22) une composante de chrominance du signal vidéo, constituant un des des signaux d'affichage, et la composante de luminance du signal vidéo, constituant l'autre signal d'affichage.

2. Appareil selon la revendication 1, caractérisé en ce que le signal vidéo est un signal vidéo couleur à composantes multiplexées par répartition dans le temps, l'appareil comprenant en outre des moyens de décalage dans le temps pour produire, à partir du signal vidéo, la composante de chrominance et la composante de luminance décalées dans le temps d'une valeur déterminée l'une par rapport à l'autre.

3. Appareil selon la revendication 1, caractérisé en ce qu'il comprend en outre de moyens de graticule superposés aux moyens d'affichage pour établir une relation entre la représentation visuelle et un étalon, ces moyens de graticule comportant des symboles identifiant des emplacements sur les moyens d'affichage, correspondant aux emplacements respectifs d'une représentation visuelle étalon de teintes sélectionnées.

4. Appareil selon la revendication 1, caractérisé en ce que le plan est un plan cartésien, une des directions de vecteur correspondant à l'axe des abscisses d'un système de coordonnées cartésiennes, et l'autre direction de vecteur correspondant à l'axe des ordonnées de ce système, les moyens d'affichage (22) ayant des entrées de signaux d'abscisses et d'ordonnées respectives.

5. Appareil selon la revendication 4, caractérisé en ce que les moyens d'affichage (22) comprennent un dispositif d'affichage à tube à rayons cathodiques, l'entrée de l'axe des abcisses correspondant à l'entrée de la déviation horizontale de celui-ci et l'entrée de l'axe des ordonnées correspondant à l'entrée de la déviation verticale de celui-ci.

6. Appareil selon la revendication 4, caractérisé en ce que les moyens d'entrée fournissent la composante de luminance à l'entrée de l'axe des ordonnées des moyens d'affichage et la composante de chrominance à l'entrée de l'axe des abscisses des moyens d'affichage.

7. Appareil selon la revendication 6, caractérisé en ce que le signal vidéo à composantes est un signal vidéo couleur à composantes multiplexées par répartition dans le temps, l'appareil comprenant en outre des moyens de décalage dans le temps pour produire, à partir de ce signal vidéo, la composante de chrominance et la composante de luminance décalées dans le temps d'une quantité déterminée l'une par rapport à l'autre.

8. Appareil selon la revendication 6, caractérisé en ce que les moyens d'entrée comportent des moyens inverseurs (70) pour produire une composante de luminance inversée, et des moyens de commutation (68, 72) pour fournir alternativement une composante de chrominance du signal vidéo aux moyens d'affichage avec la composante de luminance, et l'autre composante de chrominance avec a composante de luminance inversée.

9. Appareil selon la revendication 8, caractérisé en ce qu'il comprend en outre des moyens de graticule superposés aux moyens d'affichage pour établir une relation entre la représentation visuelle et un étalon, ces moyens de graticule comportant des symboles identifiant des emplacements sur les moyens d'affichage, correspondant aux emplacements respectifs d'une représentation visuelle étalon de teintes sélectionnées.

10. Appareil pour la mesure de caractéristiques d'un signal vidéo couleur à composantes multiplexées par répartition dans le temps, caractérisé en ce qu'il comprend:

(a) des moyens d'affichage pour produire en deux dimensions une représentation visuelle de la somme vectorielle de deux signaux d'affichage, chacun de ces signaux d'affichage correspondant à un vecteur respectif ayant une direction orthogonale à celle de l'autre et étant situé dans un plan défini par les deux dimensions;

(b) des moyens de décalage dans le temps pour produire, à partir du signal vidéo, deux signaux d'entrée, chacun de ces signaux d'entrée représentant une composante respective du signal vidéo décalée dans le temps d'une quantité déterminée par rapport à l'autre; et

(c) des moyens d'entrée pour fournir aux moyens d'affichage un des signaux d'entrée constituant un des signaux d'affichage, et l'autre signal d'entrée constituant l'autre signal d'affichage.

11. Appareil selon la revendication 10, caractérisé en ce que le deux signaux d'entrée représentent les composantes de chrominance du signal vidéo.

12. Appareil selon la revendication 10, caractérisé en ce que l'un des signaux d'entrée représente une composante de chrominance du signal vidéo et que l'autre signal d'entrée représente la composante de luminance du signal vidéo.

13. Appareil selon la revendication 10, caractérisé en ce que les moyens de décalage dans le temps (28) comprennent un circuit à retard pour décaler une composante d'un intervalle de temps de telle manière qu'en l'absence de distorsion, des parties des deux composantes correspondant à la même partie de l'image vidéo se se produisent en même temps.

14. Appareil selon la revendication 10, caractérisé en ce qu'il comprend en outre des moyens de graticule superposés aux moyens d'affichage pour établir une relation entre la représentation visuelle et un étalon, ces moyens de graticule comportant des symboles identifiant des emplacements sur les moyens d'affichage, correspondant à des emplacements respectifs d'une représentation visuelle étalon de teintes sélectionnées.

15. Appareil selon la revendication 10, caractérisé en ce que le plan est un plan cartésien, une direction de vecteur correspondant à l'axe des abscisses d'un système de coordonnées cartésiennes correspondant, et l'autre direction de vecteur correspondant à l'axe des ordonnées de ce système les moyens d'afficha, e ayant des entrées respectives de signaux d'abscisses et d'ordonnées.

16. Appareil selon la revendication 15, caractérisé en ce qu'un des signaux d'entrée représente une composante de chrominance du signal vidéo, et l'autre signal d'entrée représente l'autre composante de chrominance du signal vidéo.

17. Appareil selon la revendication 15, caractérisé en ce que l'un des signaux d'entrée représente une composante de chrominance du signal vidéo, et que l'autre signal d'entrée représente la composante de luminance du signal vidéo.

18. Appareil selon la revendication 17, caractérisé en ce qu'il comprend en outre des moyens inverseurs (70) pour produire une composante de luminance inversée et des moyens de commutation (68, 72) pour fournir alternativement à l'entrée de l'axe des ordonnées et à l'entrée de l'axe des abscisses le premier signal de luminance et une composante de chrominance, respectivement, puis le signal de luminance inversé et l'autre signal de chrominance, respectivement.

19. Appareil selon la revendication 18, caractérisé en ce qu'il comprend en outre des moyens de graticule superposés aux moyens. d'affichage pour établir une relation entre la représentation visuelle et un étalon, ces moyens de graticule comportant des symboles identifiant des emplacements sur les moyens d'affichage, correspondant à des emplacements respectifs d'une représentation visuelle étalon de teintes sélectionnées.

20. Procédé pour mesurer les caractéristiques d'un signal vidéo couleur à composantes, utilisant des moyens d'affichage pour produire en deux dimensions une représentation visuelle de la somme vectorielle de deux signaux d'affichage, chacun de ces signaux d'affichage correspondant à un vecteur respectif ayant une direction orthogonale à celle de l'autre et situé dans un plan défini par les deux dimensions, caractérisé en ce qu'il comprend les étapes consistant à:

(a) fournir aux moyens d'affchage (22), comme un des deux signaux d'affichage, une composante de chrominance du signal vidéo: et

(b) fournir aux moyens d'affichage (22), comme autre signal d'affichage, la composante de luminance du signal vidéo.

21. Procédé selon la revendication 20, caractérisé en ce que le signal vidéo est un signal multiplexé par répartition dans le temps, et qu'il comprend en outre une étape consistant à décaler cette composante de chrominance dans le temps de manière qu'en l'absence de distorsion, des parties de cette composante de chrominance et de la composante de luminance correspondant à la même partie de l'image vidéo se produisent en même temps.

22. Procédé selon la revendication 20, caractérisé en ce qu'il comprend en outre une étape consistant à superposer un graticule aux moyens d'affichage pour établir une relation entre la représentation visuelle et un étalon, ce graticule comportant des symboles identifiant des emplacements sur l'affichage, correspondant à des emplacements respectifs d'une représentation visuelle étalon de teintes sélectionnées.

23. Procédé selon la revendication 20, caractérisé en ce que le plan des moyens d'affichage est un plan cartésien, une direction de vecteur correspondant à l'axe des abscisses d'un système de coordonnées cartésiennes, et l'autre direction de vecteur correspondant à l'axe des ordonnées de ce système, ce procédé comprenant en outre une étape consistant à fournir le signal de luminance à l'entrée de l'axe des ordonnées et le signal de chrominance à l'entrée de l'axe des abscisses.

24. Procédé selon la revendication 23, caractérisé en ce que le signal vidéo est un signal multiplexé par répartition dans le temps, ce procédé comprenant en outre une étape consistant à décaler ladite composante de chrominance de manière qu'en l'absence de distorsion, des parties de ces composantes de chrominance et de luminance correspondant à la même partie de l'image vidéo se produisent en même temps.

25. Procédé selon la revendication 23, caractérisé en ce qu'il comprend en outre une étape consistant à produire une composante de luminance inversée et à fournir alternativement la composante de luminance à l'entrée de l'axe des ordonnées tandis qu'une première composante de chrominance est fournie à l'entrée de l'axe des abscisses, et la composante de luminance inversée à l'entrée de l'axe des ordonnées tandis que la deuxième composante de chrominance est fournie à l'entrée de l'axe des abscisses.

26. Procédé selon la revendication 25, caractérisé en ce qu'il comprend une étape consistant à superposer un graticule aux moyens d'affichage pour établir une relation entre la représentation visuelle et un étalon, ce graticule comportant des symboles identifiant des emplacements sur l'affichage, correspondant à des emplacements respectifs d'une représentation visuelle étalon de teintes sélectionnées.

27. Procédé pour mesurer les caractéristiques d'un signal vidéo couleur à composantes multiplexées par répartition dans le temps, utilisant des moyens d'affichage pour produire en deux dimensions une représentation visuelle de la somme vectorielle de deux signaux d'affichage, chacun de ces signaux d'affichage correspondant à un vecteur respectif ayant une direction orthogonale à celle de l'autre et situé dans un plan défini par les deux dimensions, caractérisé en ce qu'il comprend les étapes consistant à:

(a) décaler une première composante du signal vidéo dans le temps de manière qu'en l'absence de distorsion, des parties de cette première composante et d'une deuxième composante correspondant à la même partie de l'image vidéo se produisent en même temps;

(b) fournir aux moyens d'affichage (22), comme un des signaux d'affichage, la première composante, décalée; et

(c) fournir aux moyens d'affichage, comme autre signal d'affichage, la deuxième composante du signal vidéo.

28. Procédé selon la revendication 27, caractérisé en ce que tant la première composante que la deuxième composante sont des composantes de chrominance.

29. Procédé selon la revendication 27, caractérisé en ce que la première composante est une composante de chrominance et la deuxième composante est une composante de luminance.

30. Procédé selon la revendication 29, caractérisé en ce qu'il comprend en outre une étape consistant à décaler l'autre composante de chrominance du signal vidéo dans le temps de manière qu'en l'absence de distorsion, des parties de la première composante de chrominance, de la deuxième composante, de luminance, et de l'autre composante de chrominance correspondant à la même partie de l'image vidéo se produisent en même temps, à produire une composante de luminance inversée et à fournir alternativement la composante de luminance à l'entrée de l'axe des ordonnées tandis que la première composante de chrominance, décalée, est fournie à l'entrée de l'axe des abscisses, et la composante de luminance inversée à l'entrée de l'axe des ordonnées tandis que l'autre composante de chrominance, décalée, est fournie à l'entrée de l'axe des abscisses.

31. Procédé selon la revendication 30, caractérisé en ce qu'il comprend en outre une étape consistant à superposer un graticule aux moyens d'affichage pour établir une relation entre la représentation visuelle et un étalon, ce graticule comportant des symboles identifiant des emplacements sur l'affichage, correspondant à des emplacements respectifs d'une représentation visuelle étalon de teintes sélectionnées.

FIG.1

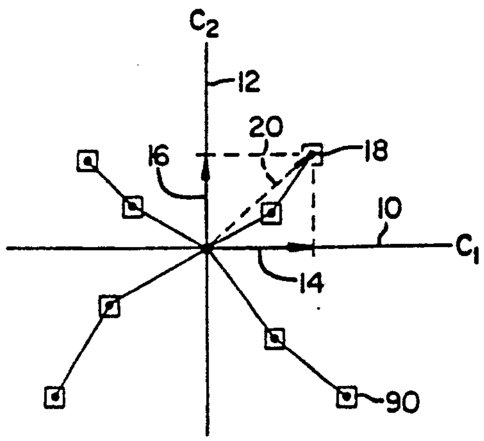


FIG.5

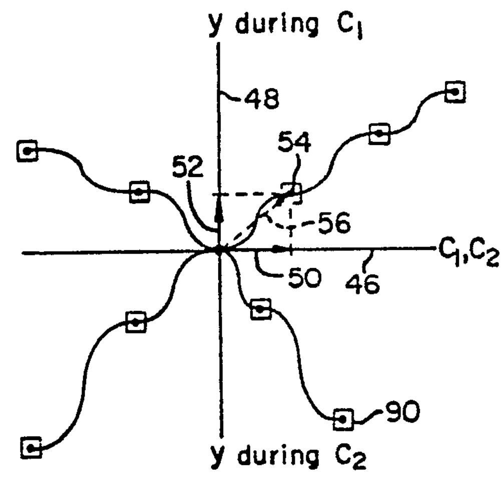


FIG.2

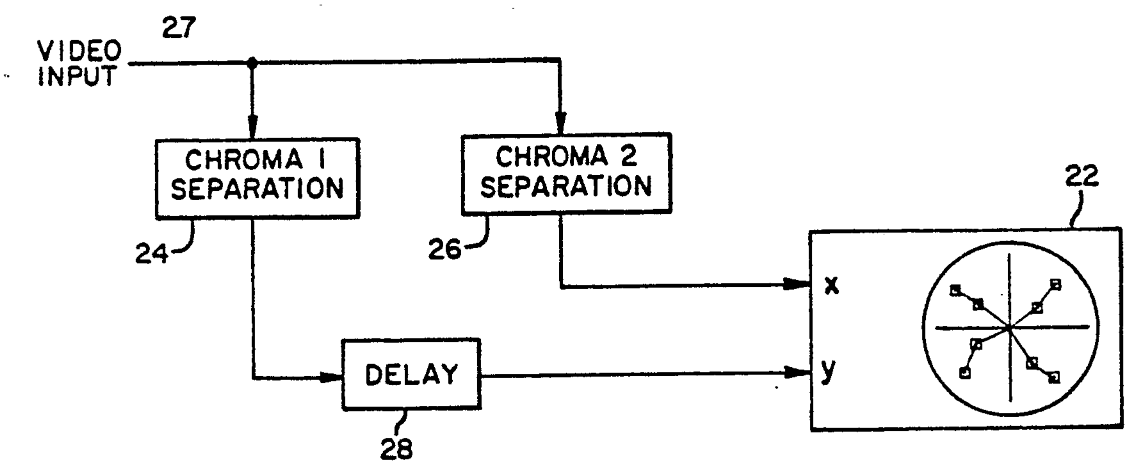


FIG.3(a)

FIG.3(b)

FIG.3(c)

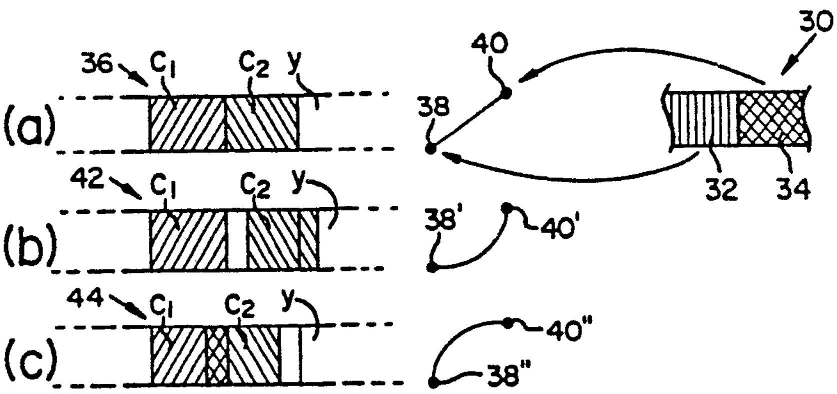


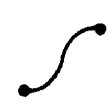

FIG.4

FIG.6

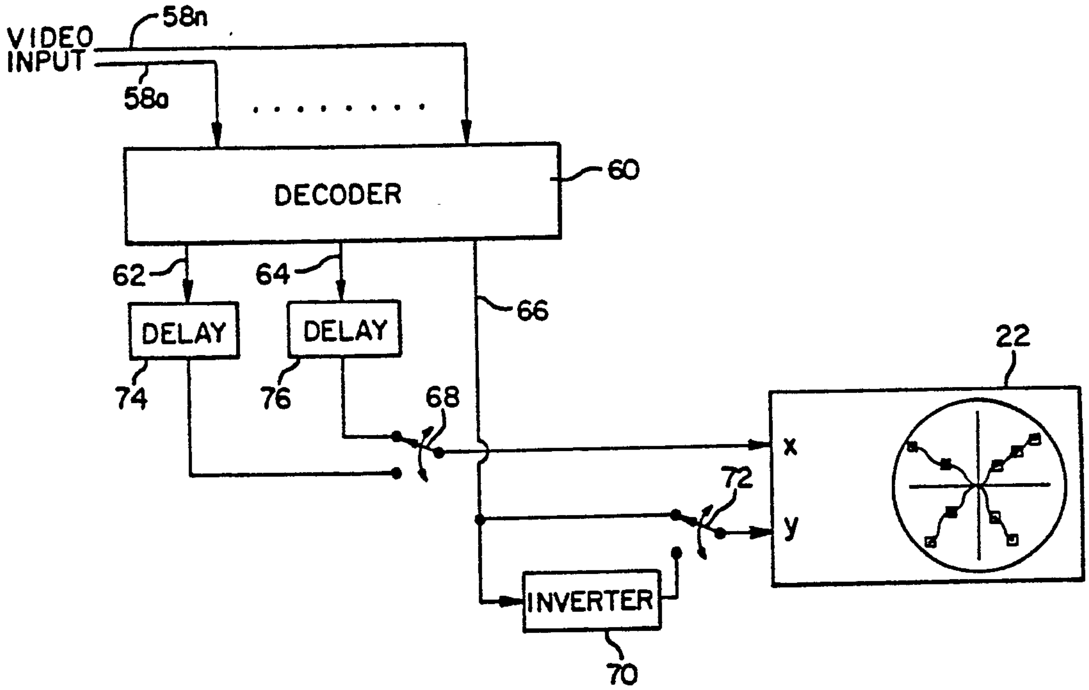


FIG. 7 (a)

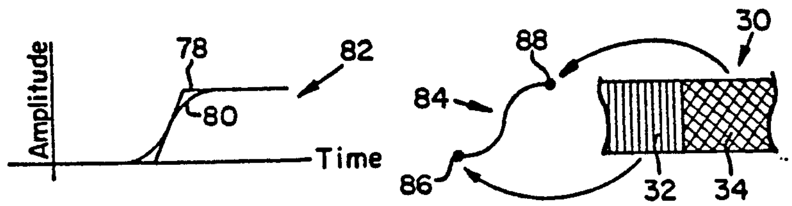


FIG. 7 (b)

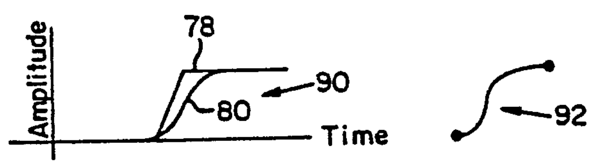


FIG. 7 (c)

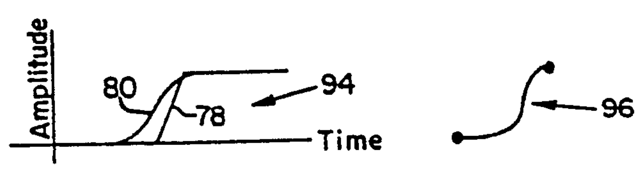


FIG.8